# FASCICULE DE BREVET EUROPEEN

(11) **EP 0 456 592 B1**
(45) Date de publication et mention de la délivrance du brevet: **08.06.1994**
(21) Numéro de dépôt: 91440028.8
(22) Date de dépôt: 05.04.1991
(51) Int. Cl.: A01D 34/70

(54) **Dispositif de ramassage pour tondeuse à gazon muni d'un fond amovible permettant de déposer directement l'herbe coupée**
Fangvorrichtung für einen Rasenmäher, mit einem abnehmbaren Boden, die erlaubt, das Schnittgut direkt fallen zu lassen
Collecting device for a lawn mower, provided with a removable bottom, allowing the cut grass to be deposited directly

(30) Priorité: 12.04.1990 FR 9004919
(43) Date de publication de la demande: 13.11.1991
(73) Titulaire: ETESIA (Société en Commandite Simple), F-67160 WISSEMBOURG (FR)
(72) Inventeur:
(74) Mandataire: Nuss, Pierre

(56) Documents cités:
- EP-A- 0 133 987
- FR-A- 2 557 419
- GB-A- 500 675
- GB-A- 2 081 564

## Description

La présente invention concerne le domaine de la construction des tondeuses à gazon et a pour objet un dispositif de ramassage permettant de déposer directement l'herbe coupée.

Généralement les tondeuses à gazon sont utilisées avec un dispositif de ramassage ou avec un déflecteur d'herbe si le ramassage n'est pas souhaité. De tels déflecteurs permettent, le cas échéant, l'andainage de l'herbe coupée qui peut ensuite être ramassée par des moyens connus.

Cependant, l'utilisation de ces andaineurs ou déflecteurs nécessite la dépose préalable du dispositif de ramassage, suivie d'une mise en place et d'une fixation du déflecteur, de sorte que l'utilisateur est tenté de déposer simplement le dispositif de ramassage sans mettre en place le déflecteur et de s'exposer ainsi aux risques de projection éventuelle de pierres ou d'autres objets dangereux.

Il a été proposé d'obvier à ces inconvénients par la réalisation de dispositifs de ramassage pourvus d'une paroi mobile, de préférence la paroi inférieure, formant déflecteur, notamment par DE-A-3 328 081 ou encore par la prévision d'un élément rigide en forme de couvercle destiné à la réception d'un sac ou d'un autre réceptacle de ramassage et formant, lorsque ce dernier est enlevé, un déflecteur (DE-A-3 130 898).

Ces déflecteurs connus forment, toutefois, en position de service, des plaques d'impact rabattant violemment les projections vers le sol, engendrent un intense développement de poussières et présentent, par l'existence d'un rétrécissement du canal d'éjection, un risque de bourrage en présence d'herbes hautes.

La présente invention a pour but de pallier les inconvénients des déflecteurs connus.

Elle a, en effet, pour objet un dispositif de ramassage de l'herbe coupée pour tondeuse à gazon caractérisé en ce qu'il est muni d'un fond amovible et en ce qu'il permet, après retrait du fond amovible, en utilisation sur la tondeuse, de déposer directement l'herbe coupée sur la surface préalablement tondue.

L'invention sera mieux comprise, grâce à la description ci-après, qui se rapporte à un mode de réalisation préféré, donné à titre d'exemple non limitatif, et expliqué avec référence au dessin schématique annexé, dans lequel :
la figure 1 est une vue en élévation latérale et en coupe du dispositif conforme à l'invention, en position de ramassage d'herbe, et
la figure 2 est une vue analogue à celle de la figure 1 représentant le dispositif avec fond amovible retiré et permettant de déposer directement l'herbe coupée.

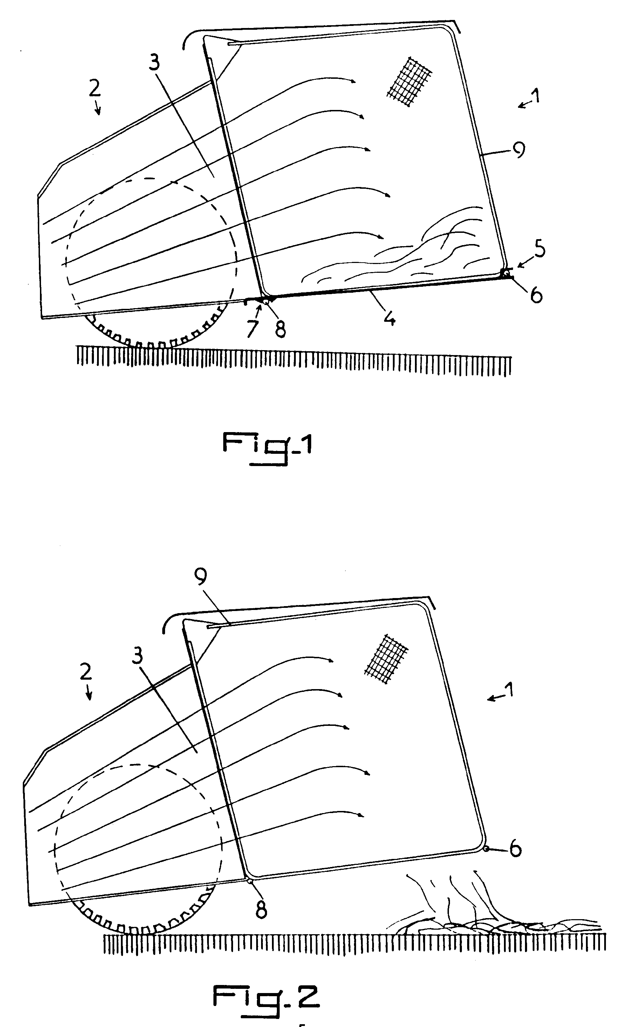

Les figures 1 et 2 du dessin annexé représentent un dispositif 1 de ramassage ou de dépôt direct de l'herbe coupée pour tondeuse à gazon, monté sur la face arrière d'une tondeuse 2 et appliqué sur le canal d'éjection 3 de cette dernière.

Conformément à l'invention, le dispositif 1 est muni d'un fond amovible 4 et forme avantageusement, après retrait du fond amovible, un dispositif permettant de déposer directement l'herbe coupée si le ramassage n'est pas souhaité.

Le fond amovible 4 est réalisé, de préférence, sous forme d'une plaque rigide munie, à une extrémité, de moyens d'accrochage 5 destinés à coopérer avec une traverse inférieure 6 du dispositif de ramassage et, à son autre extrémité, de moyens 7 de verrouillage en position de fermeture coopérant avec une autre traverse inférieure 8, parallèle à la première.

Les moyens d'accrochage 5 sont avantageusement constitués par des éléments en forme de fourche ou par une traverse profilée en U fixée sur le bord d'une extrémité de la plaque formant le fond 4 ou formant partie intégrante de ce bord.

Les moyens 7 de verrouillage en position de fermeture sont constitués, soit par des éléments en forme de clips rapportés sur la plaque formant le fond 4 près du bord opposé à celui portant les moyens 5 ou intégrés à la plaque, soit par une rainure de forme ménagée dans ladite plaque lors de sa fabrication.

Les traverses inférieures 6 et 8 destinées à coopérer avec les moyens d'accrochage 5 et avec les moyens de verrouillage 7 sont avantageusement des profilés constitutifs d'un cadre d'infrastructure du dispositif 1 ou d'un cadre rapporté sur la face inférieure dudit dispositif 1.

Ainsi, il est possible de déposer très facilement le fond amovible 4 par simple libération des moyens de verrouillage 7, par exemple par soulèvement, puis par retrait des moyens d'accrochage 5 hors de la traverse inférieure 6, ce fond 4 pouvant alors être rangé.

Selon une autre caractéristique de l'invention, le dispositif 1 peut avantageusement être constitué sous forme d'un sac en toile de matière synthétique muni d'un cadre d'accrochage 9, en fil métallique ou tubulaire, destiné à coopérer avec le canal d'éjection 3 de la tondeuse et formant le support du fond amovible 4. Un tel sac est d'utilisation particulièrement intéressante du fait qu'il amortit très bien les impacts des produits projetés par la ou les lames de coupe et qu'il permet, sous l'effet de la gravité, un dépôt en douceur de ces projections derrière la tondeuse. La perméabilité à l'air de la toile permet, pour sa part, l'évacuation à travers les parois du dispositif de la plus grande partie du flux d'air engendré par la ou les lames de coupe et réduit ainsi considérablement le développement de poussières.

Grâce à l'invention il est possible de réaliser un dispositif de ramassage de l'herbe coupée pour tondeuse à gazon qui, par simple retrait de son fond, forme un dispositif permettant de déposer directement l'herbe coupée.

Ainsi, il est possible, particulièrement pour les tondeuses de grande largeur de coupe, telles que, notamment, les tondeuses autoportées, de renoncer à la réalisation d'un déflecteur coûteux.

## Revendications

1. Dispositif de ramassage ou de dépôt direct de l'herbe coupée pour tondeuse à gazon, apte à être monté sur la face arrière d'une tondeuse (2) et apte à être appliqué sur le canal d'éjection (3) de cette dernière, caractérisé en ce qu'il est muni d'un fond amovible (4) et qu'après retrait du fond amovible (4) il est possible de déposer directement l'herbe coupée si le ramassage n'est pas souhaité et en ce qu'il est constitué sous forme d'un sac en toile de matière synthétique muni d'un cadre d'accrochage (9) en fil métallique ou tubulaire, destiné à coopérer avec le canal d'éjection (3) de la tondeuse et formant le support du fond amovible (4).

2. Dispositif, suivant la revendication 1, caractérisé en ce que le fond amovible (4) est réalisé, de préférence, sous forme d'une plaque rigide munie, à une extrémité, de moyens d'accrochage (5) destinés à coopérer avec une traverse inférieure (6) du dispositif de ramassage et, à son autre extrémité, de moyens (7) de verrouillage en position de fermeture coopérant avec une autre traverse inférieure (8), parallèle à la première.

3. Dispositif, suivant la revendication 2, caractérisé en ce que les moyens d'accrochage (5) sont avantageusement constitués par des éléments en forme de fourche ou par une traverse profilée en U fixée sur le bord d'une extrémité de la plaque formant le fond (4) ou formant partie intégrante de ce bord.

4. Dispositif, suivant la revendication 2, caractérisé en ce que les moyens (7) de verrouillage en position de fermeture sont constitués, soit par des éléments en forme de clips rapportés sur la plaque formant le fond (4) près du bord opposé à celui portant les moyens (5) ou intégrés à la plaque, soit par une rainure de forme ménagée dans ladite plaque lors de sa fabrication.

5. Dispositif, suivant l'une quelconque des revendications 2 à 4, caractérisé en ce que les traverses inférieures (6 et 8) destinées à coopérer avec les moyens d'accrochage (5) et avec les moyens de verrouillage (7) sont avantageusement des profilés constitutifs d'un cadre d'infrastructure du dispositif (1) ou d'un cadre rapporté sur la face inférieure dudit dispositif (1).

## Patentansprüche

1. Vorrichtung zum Auffangen oder zur direkten Ablage von gemähtem Gras für einen Rasenmäher, wobei die Vorrichtung geeignet ist, auf der Rückfläche eines Rasenmähers (2) befestigt und geeignet ist, auf den Auswurfkanal (3) des letzteren aufgesetzt werden zu können, dadurch gekennzeichnet, dass die Vorrichtung mit einem entfernbaren Boden (4) versehen ist und dass nach dem Herausziehen des entfernbaren Bodens (4) es möglich ist, wenn das Auffangen nicht erwünscht ist, das gemähte Gras direkt abzulegen, und dass sie in Form eines Sackes aus Kunststoffgewebe gebildet ist, der mit einem Befestigungsrahmen (9) aus Metalldraht oder rohrförmigem Material versehen ist, der zum Zusammenwirken mit dem Auswurfkanal (3) des Rasenmähers bestimmt ist und die Halterung für den entfernbaren Boden (4) bildet.

2. Vorrichtung nach Anspruch 1, dadurch gekennzeichnet, dass der entfernbare Boden (4) vorzugsweise in Form einer starren Platte ausgebildet ist, die an einem Ende mit für ein Zusammenwirken mit einer unteren Querstrebe (6) der Fangvorrichtung bestimmten Einhakeinrichtungen (5) und an ihrem anderen Ende mit Einrichtungen (7) zur Verriegelung in der Verschlusstellung versehen ist, die mit einer weiteren unteren, zur ersten Querstrebe parallelen Querstrebe (8) zusammenwirken.

3. Vorrichtung nach Anspruch 2, dadurch gekennzeichnet, dass die Einhakeinrichtungen (5) in vorteilhafter Weise durch gabelförmige Elemente oder durch eine Querstrebe mit U-Profil gebildet sind, die an dem Rand eines Endes der den Boden (4) bildenden Platte befestigt sind oder einen einstückigen Teil dieses Randes bilden.

4. Vorrichtung nach Anspruch 2, dadurch gekennzeichnet, dass die Einrichtungen (7) zur Verriegelung in der Verschlusstellung entweder durch Elemente in Form von Klammern, die an die den Boden bildende Platte in der Nähe des Randes angesetzt sind, der dem gegenüberliegt, der die Einrichtungen (5) trägt oder einstückig mit der Platte ausgebildet aufweist, oder durch eine Nut gebildet sind, die bei der Herstellung der Platte in dieser Platte ausgespart ist.

5. Vorrichtung nach einem der Ansprüche 2 bis 4, dadurch gekennzeichnet, dass die unteren Querstreben (6 und 8), die zum Zusammenwirken mit den Einhakeinrichtungen (5) und mit den Verriegelungseinrichtungen (7) bestimmt sind, vorzugsweise Profile sind, die einen Bestandteil eines Rahmens des Unterbaus der Vorrichtung (1) oder eines Rahmens sind, der an der Unterfläche der Vorrichtung (1) angesetzt ist.

## Claims

1. Device for the direct collection or depositing of cut grass for a lawnmower, appropriate to be mounted on the rear face of a mower (2) and appropriate to be applied to the ejection chute (3) of the latter, characterised in that it is provided with a removable base (4) and that after withdrawal of the removable base (4) it is possible to deposite directly the cut grass if collection is not desired and that it is made up in the form of a bag made from a cloth of synthetic material provided with a frame for hooking on (9), made from metal wire or tubular, designed to interact with the ejection chute (3) of the mower and forming the support for the removable base (4).

2. Device according to claim 1, characterised in that the removable base (4) is produced preferably in the form of a rigid plate provided, at one end, with means of hooking on (5) designed to interact with a bottom cross member (6) on the collection device and, at its other end, with means (7) for locking in the closed position interacting with another bottom cross member (8), parallel to the first.

3. Device according to claim 2, characterised in that the means of hooking on (5) advantageously consist of components in the shape of a fork or a U-shaped cross member fixed to the edge of one end of the plate forming the base (4) or forming an integral part of this edge.

4. Device according to claim 2, characterised in that the means (7) for locking in the closed position consist either of components in the form of clips attached to the plate forming the base (4) close to the edge opposite to the one bearing the means (5) or integral with the plate, or a groove with a shape made in the said plate at the time of its manufacture.

5. Device according to any one of claims 2 to 4, characterised in that the bottom cross members (6 and 8) designed to interact with the means of hooking on (5) and with the locking means (7) are, advantageously, profiled sections constituting a structural framework for the device (1) or a frame attached to the bottom face of the said device (1).
